# EUROPÄISCHE PATENTANMELDUNG

(11) **EP 2 357 119 A2**
(43) Veröffentlichungstag der Anmeldung: **17.08.2011**
(21) Anmeldenummer: 11000778.8
(22) Anmeldetag: 01.02.2011
(51) Int. Cl.: B62D 21/15, B62D 25/08, B62D 25/20, B62D 29/00

(54) **Tragstruktur, insbesondere Vorbaustruktur für eine Fahrzeugkarosserie**

(30) Priorität: 03.02.2010 DE 102010006673
(71) Anmelder: Audi AG, 85045 Ingolstadt (DE)
(72) Erfinder: Schromm, Martin, 85080 Gaimersheim (DE); Maier, Hans-Peter, 85283 Wolnzach (DE); Weigl, Willibald, 85095 Zandt (DE); Oleff, Nils, 85049 Ingolstadt (DE)
(74) Vertreter: Engelhardt, Harald

(57) **Zusammenfassung**

Die Erfindung betrifft eine Tragstruktur, insbesondere Vorbaustruktur, für eine Fahrzeugkarosserie, mit im Wesentlichen in Fahrzeuglängsrichtung verlaufenden, bezogen auf die Fahrgastzelle, äußeren Längsträgern, die im Bereich vor einer Stirnwand der Fahrgastzelle verlaufen. Erfindungsgemäß sind die äußeren Längsträger (3), im Bereich vor der Stirnwand (4) mit einem Längsträgerverstärkungselement (5) versteift, das, bevorzugt materialeinheitlich und/oder einstückig, durch die Stirnwand (4) hindurch in den Fahrgastzellenbereich (7), insbesondere in den fahrgastzellenseitigen Bodenbereich (6), geführt ist und dort einen inneren Längsträger (8) ausbildet.

## Beschreibung

Die Erfindung betrifft eine Tragstruktur, insbesondere eine Vorbaustruktur, für eine Fahrzeugkarosserie nach dem Oberbegriff des Anspruchs 1.

Aus der DE 10 2006 008 669 A1 ist bereits eine Vorbaustruktur für ein Kraftfahrzeug bekannt, das in Fahrzeuglängsrichtung verlaufende Längsträger aufweist, die im Bereich von jeweiligen Anbindungsstellen eines sich über die Wagenbreite erstreckenden Querträgers abgestützt sind. Die seitlichen Enden des Querträgers sind gegenüber einem mittleren Bereich in Fahrzeuglängsrichtung zurückspringend angeordnet, wobei die Anbindungsstellen des Querträgers gegenüber den seitlichen Enden und dem mittleren Bereich in Fahrzeuglängsrichtung nach vorne versetzt angeordnet sind. Der Querträger ist als Stirnwandquerträger ausgebildet und somit im Bereich einer die Fahrgastzelle des Kraftfahrzeugs nach vorne hin begrenzenden Stirnwand angeordnet. Mit einem derartigen Aufbau sollen sich im Falle eines Frontalaufpralls zunächst die Längsträger verformen, und zwar solange, bis deren Crashlänge aufgezehrt ist. Die bei einer entsprechend schweren Kollision im weiteren Verlauf über die Längsträger in den Querträger bzw. die dahinter angeordnete Fahrgastzelle eingeleitete Aufprallenergie bzw. Aufprallkraft wird über die genannten Anbindungsstellen an die dahinterliegende Struktur der Fahrgastzelle übertragen, ohne dass dabei erhebliche Kraftspitzen auftreten sollen. Insgesamt soll über diese Anbindungsstellen somit eine gleichmäßige Verteilung der Aufprallkräfte über die gesamte Wagenbreite erfolgen.

Weiter ist aus der DE 43 38 652 C1 eine Vorbaustruktur für einen Personenkraftwagen bekannt, bei dem die beiden Vorbaulängsträger mit Hilfe von Gabelträgern an die Stirnwand angebunden sind. Die Stirnwand ist dabei im Anschlussbereich der Vorbaulängsträger domförmig nach vorne ausgebaucht und der Vorbaulängsträger zum Aufsetzen auf die domförmige Ausbauchung glockenähnlich aufgeweitet. Damit soll eine stabile Anbindung der Vorbaulängsträger an der Stirnwand erzielt werden.

Aufgabe der vorliegenden Erfindung ist es, eine Tragstruktur, insbesondere eine Vorbaustruktur, für eine Fahrzeugkarosserie zur Verfügung zu stellen, die eine hervorragende Steifigkeit aufweist und zudem, insbesondere auch im fahrgastzellenseitigen Bereich, eine wesentlich erhöhte Funktionalität zur Verfügung stellt.

Diese Aufgabe wird gelöst mit den Merkmalen des Anspruchs 1. Vorteilhafte Ausgestaltungen hierzu sind Gegenstand der darauf rückbezogenen Unteransprüche.

Gemäß Anspruch 1 ist eine Tragstruktur für eine Fahrzeugkarosserie vorgesehen, die im Wesentlichen in Fahrzeuglängsrichtung verlaufende, bezogen auf die Fahrgastzelle, äußerer Längsträger aufweist, die im Bereich vor einer Stirnwand der Fahrgastzelle verlaufen. Erfindungsgemäß sind die äußeren Längsträger im Bereich vor der Stirnwand mit einem Längsträgerverstärkungselement versteift, das, bevorzugt materialeinheitlich und/oder einstückig, durch die Stirnwand hindurch in den Fahrgastbereich, insbesondere in den fahrgastzellenseitigen Bodenbereich, geführt ist und dort einen inneren, insbesondere einen inneren bodenseitigen Längsträger ausbildet.

Mit der vorliegenden Erfindungsidee kann somit das im Crashfall regelmäßig stark auf Biegung belastete Längsträgerverstärkungselement ohne wesentliche Schwächung vom Motorraum bzw. Vorderwagenbereich ausgehend in die Fahrgastzelle geführt werden, wo das Längsträgerverstärkungselement bevorzugt in den Boden einläuft. Ein derartiger, innerer, vorzugsweise bodenseitiger Längsträger führt zudem zu einer erhöhten Steifigkeit im fahrgastzellenseitigen Bereich, wobei dieser innere Längsträger weiter, wie die nachfolgenden Ausführungen zeigen, die Funktionalität des Tragstrukturaufbaus insgesamt erhöht.

Das Längsträgerverstärkungselement kann zum Beispiel ein- oder mehrschalig, insbesondere zweischalig als Blechbauteil ausgebildet und somit im Wesentlichen in einem Stück durchgehend durch die Stirnwand hindurchgeführt werden. Besonders bevorzugt ist hierbei jedoch eine Ausgestaltung, bei der Längsträgerverstärkungselement wenigstens im Durchtrittsbereich durch die Stirnwand materialeinheitlich und einstückig ausgebildet ist.

Das Längsträgerverstärkungselement ist gemäß einer weiteren bevorzugten Ausgestaltung formschlüssig und dicht durch die Stirnwand hindurchgeführt, wobei die Stirnwand bevorzugt mehrteilig, bevorzugt zweiteilig, ausgebildet ist und dadurch einfachst um den inneren Längsträger herum gebaut werden kann. Bevorzugt ist hierbei dann die stirnwandseitige Trennebene im Bereich des Längsträgerverstärkungselementes bzw. des inneren Längsträgers angeordnet.

Gemäß einer weiteren besonders bevorzugten Ausgestaltung ist vorgesehen, dass der durch das Längsträgerverstärkungselement gebildete innere Längsträger fahrgastzellenseitig mit wenigstens einem, bevorzugt mehreren Querträgern verbunden ist. Durch diese Querträgerverankerung am inneren Längsträger besteht eine sehr vorteilhafte Möglichkeit über den Querträger die zum Beispiel beim Frontalcrash über das Längsträgerverstärkungselement in den fahrgastzellenseitigen Bereich eingeleiteten Längskräfte zu verteilen und damit Kraftspitzen abzubauen.

In diesem Zusammenhang ist es besonders vorteilhaft, wenn der wenigstens eine Querträger zum Beispiel durch einen Sitzquerträger gebildet ist, an dem ein Fahrzeugsitzaufbau mittelbar und unmittelbar abgestützt und/oder gelagert ist. Ein derartiger, ohnehin im Fahrzeug vorzusehender Sitzquerträger kann somit in einer vorteilhaften Doppelfunktion gleichzeitig auch in der zuvor geschilderten Weise zur Kraftverteilung verwendet werden.

Besonders vorteilhaft ist es dabei, wenn der wenigstens eine Querträger in Fahrzeughochachsenrichtung gesehen von oben her auf den inneren Längsträger aufgesetzt und mit diesem verbunden wird. Eine derartige Verbindung lässt sich montagetechnisch und fertigungstechnisch besonders einfach realisieren.

Ein besonders effektiver Formschluss zwischen dem Querträger und dem inneren Längsträger lässt sich dadurch erzielen, dass der wenigstens eine Querträger den inneren Längsträger wenigstens bereichsweise formschlüssig umgreift. Hierbei ist es besonders vorteilhaft, wenn der Querträger einen abgestuften Anlagebereich aufweist, der den inneren Längsträger in einer flächigen Anlageverbindung L-förmig umgreift. Diese den inneren Längsträger wenigstens bereichsweise formschlüssig umgreifende Anbindung des wenigstens einen Querträgers stellt somit einen effektiven Formschluss dar, der es ermöglicht, die zum Beispiel beim Seitencrash auf die Querträger einwirkenden Querkräfte in den Längsträger einzuleiten.

Wie die zuvor gemachten Ausführungen zeigen, ermöglicht somit die Anbindung des wenigstens einen Querträgers am inneren Längsträger einen Aufbau, bei dem sich Längsträger und Querträger in verschiedenen Belastungsfällen gegenseitig jeweils als Lastverteiler nutzen können. Durch den stirnwandseitigen Durchtritt des Längsträgerverstärkungselementes lassen sich dabei Kraftspitzen schnell vom Vorderwagen ausgehend über die Fahrgastzelle ableiten und verteilen. Dies gilt auch umgekehrt, bei fahrgastzellenseitig im Querträgerbereich auftretenden Kraftspitzen bzw. Kraftbeaufschlagung.

Der wenigstens eine Querträger ist im Querschnitt betrachtet bevorzugt als Hohlprofil, insbesondere als U-förmiges Hohlprofil, ausgebildet, das mit seinen U-Schenkelenden, vorzugsweise mit endseitigen flanschartigen Abkantungen, mit einem Bodenblech, vorzugsweise einem Bodenblech aus einem Leichtmetall, insbesondere Aluminium, verbunden ist. Damit ergibt sich eine besonders stabile Anbindung des Querträgers am Bodenblech einerseits sowie auch am inneren Längsträger andererseits, die sich vor allem durch eine sehr gute Steifigkeit im Anbindungsbereich auszeichnet.

Besonders bevorzugt ist ein Aufbau, bei dem der wenigstens eine Querträger aus dem gleichen Material, vorzugsweise aus Stahl, hergestellt ist, wie der innere Längsträger. Dadurch kann nämlich sichergestellt werden, dass der wenigstens eine Querträger mit dem inneren Längsträger auf fertigungstechnisch einfache und kostengünstige Weise stoffschlüssig, vorzugsweise durch Schweißen, insbesondere durch Punktschweißen, mit dem inneren Längsträger verbunden werden kann.

Insbesondere in letzterem Zusammenhang ist es von besonderem Vorteil, wenn der innere Längsträger gemäß einer weiteren besonders bevorzugten Ausgestaltung der vorliegenden Erfindungsidee, wenigstens bereichsweise, bezogen auf die Anordnung eines Bodenblechs, in der Fahrgastzelle verläuft bzw. angeordnet ist. Beispielsweise kann in diesem Zusammenhang der innere Längsträger auch Bestandteil eines Bodenblechs direkt bilden. Bei einem derartigen Aufbau ist sichergestellt, dass der innere Längsträger und der wenigstens eine Querträger aus dem gleichen Material aufgebaut sein können und damit miteinander verschweißt werden können, da hier zum Beispiel keine Trennung dieser beiden Bauteile durch zum Beispiel ein Aluminiumblech als Bodenblech erfolgt. Das vorliegende, erfindungsgemäße Längsträgerkonzept kann somit vorteilhaft in einer Mischbaukarosserie umgesetzt werden, bei der einzelne Bauteile aus Stahl und weitere Bauteile aus einem Leichtmetall, zum Beispiel Aluminium, hergestellt sind.

Gemäß einer weiteren bevorzugten erfindungsgemäßen Ausgestaltung kann vorgesehen sein, dass der innere Längsträger mit wenigstens einem Bodenblech, vorzugsweise mit einem Bodenblech aus Leichtmetall, insbesondere aus Aluminium, verbunden ist, wobei ein, im Querschnitt durch die Fahrgastzelle betrachtet, in Richtung zur Fahrzeugaußenseite hin liegendes Bodenblech oder Bodenblechbereich, in Fahrzeughochachsenrichtung gesehen, geodätisch höher liegend am inneren Längsträger angebunden ist als ein auf der gegenüberliegenden Längsträgerseite in Richtung zur Fahrzeugmitte hin liegendes Bodenblech oder Bodenblechbereich. Durch das außerhalb der Längsträgerspur von der Ober- auf die Unterkante des Längsträgerprofils abgesenkte Bodenblech entsteht zum einen ein zusätzliches Innenraumvolumen, das zum Beispiel zur Unterbringung von zusätzlichen Bauteilen, wie zum Beispiel Steuergeräten, Leitungen, etc. genutzt werden kann. Zum anderen entsteht dadurch ein flacher Unterboden, auf dem sich kein Längsträger mehr nach unten abstehend abzeichnet, wodurch gegebenenfalls eine Aerodynamik-Unterbodenverkleidung eingespart werden kann.

Eine besonders bevorzugte Ausgestaltung sieht vor, dass der innere Längsträger wenigstens einen von der, im Querschnitt und in Fahrzeughochachsenrichtung betrachtet, Oberseite und/oder Unterseite wegragenden, bevorzugt im Wesentlichen horizontal verlaufenden, Flanschabschnitt aufweist, an dem das jeweils zugeordnete Bodenblech angebunden ist, insbesondere im Falle unterschiedlicher Materialien mittels einer Niet- und/oder Klebeverbindung angebunden ist. Derartige Flanschabschnitte erlauben eine besonders schnelle und einfache Anbindung der jeweiligen Bodenbleche und ermöglichen somit auf einfache Weise die zuvor beschriebene stufenartige (bezogen auf die Fahrzeughochachsenrichtung) Anordnung von unterschiedlichen Bodenblechbereichen.

Das Längsträgerverstärkungselement kann ebenfalls grundsätzlich auf unterschiedlichste Art und Weise ausgebildet sein. Besonders bevorzugt ist jedoch ein Aufbau, bei dem das Längsträgerverstärkungselement wenigstens im fahrgastzellenseitigen Bereich, der den inneren Längsträger ausbildet, wenigstens abschnittsweise als Hohlprofil, bevorzugt als geschlossenes Hohlprofil, ausgebildet ist.

Die Erfindung wird nachfolgend anhand einer Figur näher erläutert.

Es zeigen:
- Fig. 1: schematisch eine Seitenansicht eines Querschnitts durch eine Vorbaustruktur einer Fahrzeugkarosserie mit einer erfindungsgemäßen Tragstruktur,
- Fig. 2: schematisch einen Querschnitt entlang der Linie A-A der Fig. 1, und
- Fig. 3: ebenfalls einen Querschnitt entlang der Linie A-A der Fig. 1, bei dem der Schnitt als sogenannter Nullschnitt ohne dahinterliegende Bauteile, lediglich im tatsächlichen Schnittbereich gezeigt ist.

In den Figuren ist schematisch und beispielhaft eine Ausgestaltungsmöglichkeit einer erfindungsgemäßen Tragstruktur 1 für eine hier nicht im Detail dargestellte Fahrzeugkarosserie gezeigt, die im Vorderwagenbereich 2, zwei auf hier nicht dargestellten gegenüberliegenden Fahrzeugseiten verlaufende äußere Längsträger 3 aufweist, die zum Beispiel im Bereich einer hier nur äußerst schematisch dargestellten Stirnwand 4 angebunden sind und sich im Wesentlichen in Fahrzeuglängsrichtung erstrecken.

Die äußeren Längsträger 3 sind im Bereich vor der Stirnwand 4 mit einem Längsträgerverstärkungselement 5 versteift, das hier materialeinheitlich und einstückig durch die Stirnwand 4 hindurch in den Bodenbereich 6 einer Fahrgastzelle 7 geführt ist und dort einen bodenseitigen, inneren Längsträger 8 ausbildet, der sich in Fahrzeuglängsrichtung gesehen, fahrgastzellenseitig über einen vorgegebenen Bereich der Fahrgastzelle erstreckt.

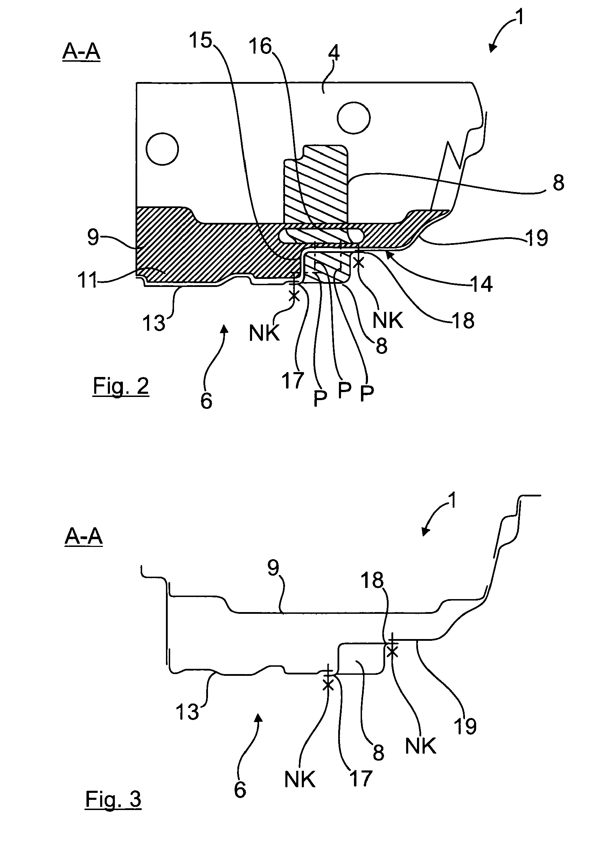

Wie dies insbesondere aus der Fig. 2 ersichtlich ist, ist das Längsträgerverstärkungselement 5 bevorzugt formschlüssig und dicht durch die Stirnwand 4 hindurchgeführt.

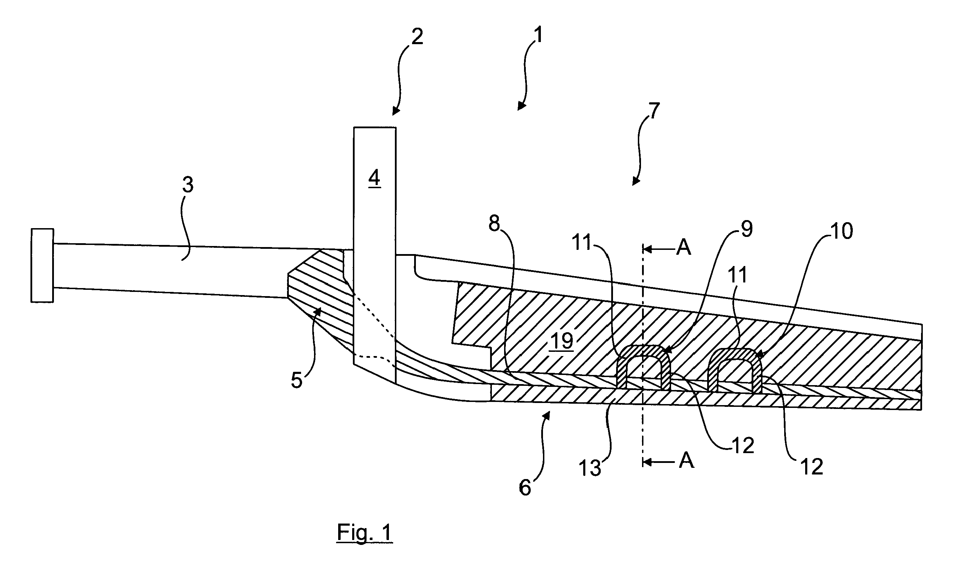

Wie dies aus den Figuren weiter ersichtlich ist, ist der innere Längsträger 8 fahrgastzellenseitig mit zwei im Wesentlichen parallel verlaufenden, voneinander beabstandeten Sitzquerträgern 9, 10 verbunden. Diese Querträger weisen, wie dies insbesondere aus der Fig. 1 ersichtlich ist, bevorzugt einen U-förmigen Hohlprofilquerschnitt auf, so dass die U-Schenkel 11, 12 mit einem nachfolgend noch näher beschriebenen Bodenblech 13, das bevorzugt aus einem Aluminiummaterial hergestellt ist, verbunden sind.

Wie dies insbesondere aus den Fig. 2 und 3 ersichtlich ist, ist das Längsträgerverstärkungselement 5 insbesondere im Bereich des inneren Längsträgers 8 durch einen zum Beispiel geschlossenen Hohlprofilquerschnitt gebildet, auf dem die Sitzquerträger 9, 10 von oben her aufgesetzt sind. Hierzu weisen die Sitzquerträger 9, 10 im Bereich des dem inneren Längsträger 8 zugeordneten Endbereichs jeweils eine L-förmige Abstufung 14 auf, die mit den U-schenkelseitigen L-Schenkeln 15, 16 in einer flächigen Anlageverbindung an einem, bezogen auf die Bildebene der Fig. 2 inneren Seitenwandbereich und einem oberen Seitenwandbereich des inneren Längsträgers 8 anliegen bzw. aufliegen. Beispielsweise sind hierzu im Bereich der L-Schenkel randseitige, flanschartige Abkantungen vorgesehen (nicht dargestellt), die am inneren Längsträger 8 flächig anliegen.

Bevorzugt ist sowohl der innere Längsträger 8 und damit das Längsträgerverstärkungselement 5 als auch die beiden Sitzquerträger 9, 10 aus einem Stahlblech hergestellt, so dass die Sitzquerträger 9, 10 an dem inneren Längsträger 8 einfachst und kostengünstig durch Punktschweißen angebunden werden können. Dies ist in der Fig. 2 lediglich äußerst schematisch strichpunktiert gezeigt und mit dem Buchstaben P gekennzeichnet.

Der innere Längsträger 8, der zum Beispiel durch zwei miteinander verbundene Blechschalen aus einem gleichen Material hergestellt ist weist, bezogen auf die Bildebene der Fig. 2 und 3 am oberseitigen rechten äußeren Randbereich und am unterseitigen, linken unteren Randbereich jeweils einen Flanschabschnitt 17, 18 auf, an dem bevorzugt mittels einer Niet- und Klebeverbindung (NK in den Figuren) jeweils ein außenseitiges Bodenblech 19 und das zuvor bereits beschriebene innenseitige Bodenblech 13 angebunden sind. Mittels der Niet- und Klebeverbindung lässt sich zum einen eine hochfeste und zum anderen auch eine dichte Verbindung der bevorzugt aus unterschiedlichen Materialien hergestellten Bauteile realisieren. Dies gilt im vorliegenden Fall explizit für alle Bauteilverbindungen aus unterschiedlichen Materialien.

Wie die Darstellung der Fig. 2 und 3 weiter zeigt, bildet somit der innere Längsträger 8 in der hier gezeigten bevorzugten Ausführungsform einen integralen Bestandteil des Bodenbereichs 6 und weist nach innen, in die Fahrgastzelle 7.

## Patentansprüche

1. Tragstruktur, insbesondere Vorbaustruktur, für eine Fahrzeugkarosserie, mit im Wesentlichen in Fahrzeuglängsrichtung verlaufenden, bezogen auf die Fahrgastzelle, äußeren Längsträgern, die im Bereich vor einer Stirnwand der Fahrgastzelle verlaufen,
**dadurch gekennzeichnet,**
**dass** die äußeren Längsträger (3), im Bereich vor der Stirnwand (4) mit einem Längsträgerverstärkungselement (5) versteift sind, das, bevorzugt materialeinheitlich und/oder einstückig, durch die Stirnwand (4) hindurch in den Fahrgastzellenbereich (7), insbesondere in den fahrgastzellenseitigen Bodenbereich (6), geführt ist und dort einen inneren Längsträger (8) ausbildet.

2. Tragstruktur nach Anspruch 1, **dadurch gekennzeichnet, dass** das Längsträgerverstärkungselement (5) wenigstens im Durchtrittsbereich durch die Stirnwand (4) materialeinheitlich und/oder einstückig ausgebildet ist.

3. Tragstruktur nach Anspruch 1 oder 2, **dadurch gekennzeichnet, dass** das Längsträgerverstärkungselement (5) formschlüssig und dicht durch die Stirnwand (4) hindurchgeführt ist, wobei die Stirnwand (4) bevorzugt mehrteilig, insbesondere zweiteilig, ausgebildet ist.

4. Tragstruktur nach einem der Ansprüche 1 bis 3, **dadurch gekennzeichnet, dass** der durch das Längsträgerverstärkungselement (5) gebildete innere Längsträger (8) fahrgastzellenseitig mit wenigstens einem, bevorzugt mit mehreren Querträgern (9, 10) verbunden ist.

5. Tragstruktur nach Anspruch 4, **dadurch gekennzeichnet, dass** der wenigstens eine Querträger (9, 10) ein Sitzquerträger ist, an dem ein Fahrzeugsitzaufbau mittelbar oder unmittelbar abgestützt und/oder gelagert ist.

6. Tragstruktur nach Anspruch 4 oder 5, **dadurch gekennzeichnet, dass** der wenigstens eine Querträger (9, 10) in Fahrzeughochachsenrichtung gesehen von oben her auf den inneren Längsträger (8) aufgesetzt und mit diesem verbunden ist.

7. Tragstruktur nach einem der Ansprüche 4 bis 6, **dadurch gekennzeichnet, dass** der wenigstens eine Querträger (9, 10) den inneren Längsträger (8) wenigstens bereichsweise formschlüssig umgreift, insbesondere der Querträger (9, 10) mit einem abgestuften Anlagebereich den inneren Längsträger (8) in einer flächigen Anlageverbindung in etwa L-förmig umgreift.

8. Tragstruktur nach einem der Ansprüche 4 bis 7, **dadurch gekennzeichnet, dass** der wenigstens eine Querträger (9, 10) im Querschnitt betrachtet als Hohlprofil, insbesondere als U-förmiges Hohlprofil, ausgebildet ist, das mit seinen U-Schenkelenden, vorzugsweise mit dort randseitig ausgebildeten flanschartigen Abkantungen, mit einem Bodenblech (13, 19), vorzugsweise einem Bodenblech aus einem Leichtmetall, insbesondere Aluminium, verbunden ist.

9. Tragstruktur nach einem der Ansprüche 4 bis 8, **dadurch gekennzeichnet, dass** der wenigstens eine Querträger (9, 10) aus dem gleichen Material, vorzugsweise aus Stahl, hergestellt ist wie der innere Längsträger (8), und
dass der wenigstens eine Querträger (9, 10) mit dem inneren Längsträger (8) stoffschlüssig, vorzugsweise durch Schweißen, insbesondere durch Punktschweißen, miteinander verbunden ist.

10. Tragstruktur nach einem der Ansprüche 1 bis 9, **dadurch gekennzeichnet, dass** der innere Längsträger (8) wenigstens bereichsweise, bezogen auf die Anordnung eines Bodenblechs, in der Fahrgastzelle (7) verläuft und/oder Bestandteil eines Bodenblechs bildet.

11. Tragstruktur nach einem der Ansprüche 1 bis 10, **dadurch gekennzeichnet, dass** der innere Längsträger (8) mit wenigstens einem Bodenblech (13, 19), vorzugsweise mit einem Bodenblech aus Leichtmetall, insbesondere aus Aluminium, verbunden ist, wobei ein, im Querschnitt durch die Fahrgastzelle (7) betrachtet, in Richtung zur Fahrzeugaußenseite hin liegendes Bodenblech (19) oder Bodenblechbereich in Fahrzeughochachsenrichtung gesehen geodätisch höher liegend am inneren Längsträger (8) angebunden ist als ein auf der gegenüberliegenden Längsträgerseite in Richtung zur Fahrzeugmitte hin liegendes Bodenblech (13) oder Bodenblechbereich.

12. Tragstruktur nach Anspruch 11, **dadurch gekennzeichnet, dass** der innere Längsträger (8) wenigstens einen, im Querschnitt und in Fahrzeughochachsenrichtung betrachtet, von der Oberseite und/oder Unterseite wegragenden, bevorzugt im Wesentlichen horizontal verlaufenden, Flanschabschnitt (17, 18) aufweist, an dem das jeweils zugeordnete Bodenblech angebunden ist, insbesondere im Falle unterschiedlicher Materialien mittels einer Niet- und/oder Klebeverbindung angebunden ist.

13. Tragstruktur nach einem der Ansprüche 1 bis 12, **dadurch gekennzeichnet, dass** das Längsträgerverstärkungselement (5) wenigstens im fahrgastzellenseitigen Bereich, der den inneren Längsträger (8) ausbildet, wenigstens abschnittsweise als Hohlprofil, bevorzugt als geschlossenes Hohlprofil, ausgebildet ist.
